# EUROPEAN PATENT SPECIFICATION

(11) **EP 1 950 984 B1**
(45) Date of publication and mention of the grant of the patent: **13.10.2010**
(21) Application number: 07101358.5
(22) Date of filing: 29.01.2007
(51) Int. Cl.: H04W 4/12, H04W 4/02, H04L 12/58, G06F 17/30

(54) **Method of sending a map location using generated context-sensitive messages**
Verfahren zum Versenden einer Kartenposition mittels generierter, kontextabhängiger Nachrichten
Procédé d'envoi d'un emplacement cartographique utilisant des messages contextuels générés

(43) Date of publication of application: 30.07.2008
(73) Proprietor: RESEARCH IN MOTION LIMITED, Waterloo, Ontario N2L 3W8 (CA)
(72) Inventor: Bowman, Gordon Gregory, Kemptville Ontario K0G 1J0 (CA)
(74) Representative: Patel, Binesh

(56) References cited:
- EP-A- 1 239 392
- WO-A-02/17130
- WO-A-03/071825
- WO-A-2004/059251
- WO-A-2006/127388
- WO-A2-02/17567

## Description

The present disclosure relates generally to wireless communications devices and, in particular, to techniques for sending map locations from wireless communications devices.

Many map applications that run either on a desktop computer or on a wireless communications device currently enable a user to send (e-mail) a location to a recipient. Typically, this is accomplished by selecting a "Send Location" or "Email Location" function from a menu. The message conveying the location to the recipient typically includes the hyperlink (or URL) for the web page of the web-based map, the e-mail address of the sender (or the sender's name/alias) as well as a brief, generic statement addresses to the recipient to the effect that a map or location has been received and that the map is accessible by the recipient by simply clicking on the hyperlink. Some examples are MapQuest™, Yahoo! Maps™, myTELUS™. As a further refinement, some of these map applications enable the user to compose a brief personalized message to provide further information about the map, e.g. "This is where I live" or "Meet me for lunch here". Some of these applications include a subject line as well to enable the user type personalized text for a subject line. One shortcoming of this current mapping technology is that the message conveying the location does not provide any information about the location unless the user takes the time to compose a personalized message.

A further deficiency is that these map applications were designed primarily for use on desktop computers, which have no GPS capabilities. When using any of these prior-art map applications on a mobile device equipped with GPS tracking, the application is unaware as to whether it is merely sending a map location or whether it is sending the device's current location.

Therefore, an improved method of generating a message containing a link to a map location, that overcomes one or more of these deficiencies, remains highly desirable.

WO 02/17567 A2 discloses a mobile terminal able to store geographical location data and send to other terminals the location data together with location related associated data in auto-generated text messages.

The location-related associated data, that may be automatically associated with the location data by the mobile terminal, are automatically embedded within an auto-generated text message when the user of the mobile terminal chooses to send the location data to another terminal.

WO 2004/059251 A1 discloses a mobile device able to store geographical positions together with associated attributes such as names and categories.

### BRIEF DESCRIPTION OF THE DRAWINGS

Further features and advantages of the present technology will become apparent from the following detailed description, taken in combination with the appended drawings, in which:

FIG. 1 is a flowchart outlining steps of a method of a sending a map location using a predefined context-sensitive message;

FIG. 2 is a block diagram of key components of a GPS-enabled wireless communications device on which the present technology can be implemented;

FIG. 3A is a schematic depiction of a map showing the current location of the device as determined from a GPS position fix;

FIG. 3B is a schematic depiction of an e-mail containing automatically generated text notifying the recipient that he has received a hyperlinked URL to enable the recipient to download a map showing the current position of the sender's device;

FIG. 4A is a schematic depiction of a map showing a point of interest;

FIG. 4B is a schematic depiction of an e-mail containing automatically generated text notifying the recipient that he has received a hyperlinked URL to enable the recipient to download a map showing the point of interest;

FIG. 5A is a schematic depiction of a map showing a route from a starting location to a destination location; and

FIG. 5B is a schematic depiction of an e-mail containing automatically generated text presenting the driving directions and further providing a hyperlinked URL to enable the recipient to download a map showing the route.

It will be noted that throughout the appended drawings, like features are identified by like reference numerals.

### GENERAL

The present technology provides a method according to any of claims 1 to 4.

Another aspect of the present technology provides a computer program product comprising code adapted to perform the steps of the foregoing method when the computer program product is loaded into memory and executed on a processor of a wireless communications device.

Yet another aspect of the present technology provides a computing device for sending a message to enable a recipient to view a location on a map, according to any of claims 6 onwards.

### DESCRIPTION OF PREFERRED EMBODIMENTS

The details and particulars of these aspects of the technology will now be described below, by way of example, with reference to the attached drawings.

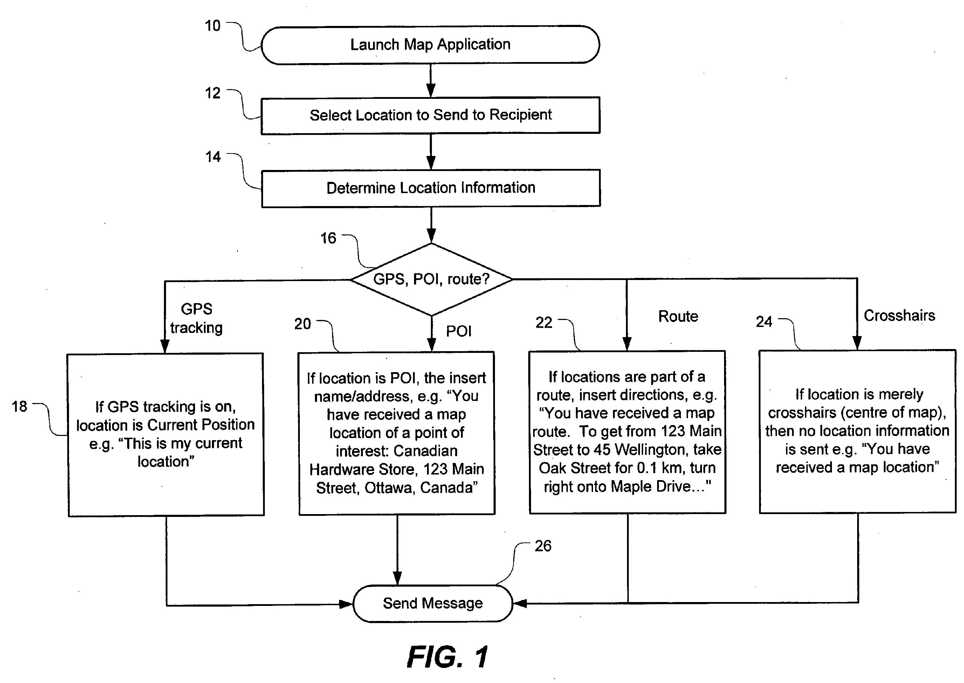

FIG. 1 is a flowchart outlining steps of a method of generating a message from a map application to enable a recipient of the message to view a location on a map. As shown in FIG. 1, after an initial step of launching the map application (step 10), the map application enables the user to select a location for sending to the recipient (step 12). For example, to send the crosshairs location, a GPS location or a point of interest (POI) location, the user chooses, for example, "Send Location" from a menu. After selecting a map location to be sent to the recipient, the map application determines map location information associated with the map location (step 14). What constitutes map location information associated with the map location is elaborated below, with the aid of a number of specific examples.

In one particular implementation, the step of determining map location information associated with the location (step 14) entails a sub-step (step 16) of determining whether or not the device is operating in GPS tracking mode (in which case the location is the current position of the device as determined from the GPS position fix). If operating in GPS tracking mode, a message is generated with the location information automatically embedded as text in the message. In other words, generating the message (at step 18) to be sent (at step 26) to the recipient involves creating a message containing a link (e.g. a hyperlinked URL) to enable the recipient to simply click on the hyperlink to download the map showing the map location and further containing the map location information automatically embedded as text within the message to provide an easily readable and user-friendly message.

As shown at step 18, by way of example only, let us assume the map application has determined that the device is indeed tracking current position using GPS. When user sends his location by clicking on "Send Location" or "Email Location" from the map application menu (step 26), the map application then sends a message with automatically inserted text such as "This is my current location".

If, on the other hand, the device is not using its GPS, and the user sends his location, the map application automatically generates a message with predetermined text such as "You have received a map location." This scenario is presented as step 24 (the "crosshairs" scenario where the location is simply the centre of the map, but is unrelated to any POI, route, or GPS data). Although the crosshairs embed coordinates of latitude and longitude as well as a zoom level in the URL, this information is preferably not included in the body of the message. The map application, however, could include a preferences/options/settings menu to enable the user to specify that where the device is not in GPS-tracking mode and where the map location does not correspond to a POI, the message body is to include coordinates.

At step 16, the map application also determines (if it is not operating in GPS tracking mode) whether the location corresponds to a Point of Interest (POI). A Point of Interest (POI) can be any specific geographical entity (e.g. a city, town, village, etc.) or any urban landmark, address, business, etc. For example, Google™ Local search enables users to keyword-search for local businesses in a specified city. Points of Interest are then identified on a map of the city using red location markers. Each location marker has a caption bubble associated therewith, containing further information about the business, e.g. name, address, phone number, website, etc.) The location information for a POI, in this example, would be the name and address information contained in the caption bubble. At step 20, if the location is a POI, then the text incorporated automatically would convey characteristics, attributes or information about the POI to the recipient as text in the body of the message, e.g. "You have received a map location of a point of interest: Canadian Hardware Store, 123 Main Street, Smalltown, Canada."

Still referring to step 16, the map application would also (in this implementation) determine whether the location being specified is actually part of a map route.
In other words, the map application determines whether the user has entered a starting location and a destination location, thus defining a route, in which case the directions constitute the location information to be sent to the recipient. In other words, selecting "Send Directions" from a menu within the map application causes the map route to be sent to the recipient, containing a hyperlinked URL along with a generic message such as "John.Doe@domain.com has sent you a directions to 123 Main Street, Smalltown, Canada". To view the map route, click in on the link below." Thus, the driving directions would be presented in a user-friendly format directly within the body of the message rather than requiring the recipient to access the directions by clicking on the hyperlinked URL. The recipient would only click on the hyperlinked URL if he or she wishes to view the map route plotting on a map.

At step 22, the directions are inserted into the message as text, e.g. "You have received a map route. To get from 123 Main Street to 45 Wellington, take Oak Street for 0.1 km, turn right onto Maple Drive for 1.5 km, then turn left onto Wellington for 0.7 km."

As a further variant, the map application could further determine if the coordinates lie within a particular city, in which case a particular setting in the map application could enable the application to identify the city in the text, e.g. "You have received a map location that is within Ottawa".

As yet a further variant, the map application could have a setting to enable the application to identify the closest city or landmark, in which case this city or landmark could be identified in the text of the message, e.g. "You have received a map location that is near Ottawa", or "You have received a map location that is near Parliament". Optionally, the text could identify both the landmark and the city, e.g. "You have received a map location that is near Parliament in the City of Ottawa."

The predetermined text in these context-sensitive messages could then be editable at the user's option. In other words, after the application automatically generates the text based on context (i.e. what the location is), the user could, at his option, edit the automatically generated text or add to it, in order to personalize the text message.

In a further variant, the map application could automatically insert a subject line in the e-mail, SMS, MMS or PIN message. For example, if sending a current location, the subject line could be auto-generated with, for example, "My Current Location". If sending a map route, the subject line could be auto-generated with, for example, "Map Route for 123 Main Street". If sending a POI, the subject line could be automatically inserted as, for example, "Map for Canadian Hardware Store".

As a further refinement, the map application could automatically insert the sender's name and/or the recipient's name, to make the message even more user-friendly, e.g. "John, this is my current location. Regards, Mary." The map application could have setting to change the format of the auto-generated text. For example, the user could select a formal text, e.g. "You have received a current location from Mary" or a more informal one, e.g. "Mary has sent you her current location."

As another variant, the time at which the GPS coordinates were acquired could be inserted into the text message to indicate when the position fix was taken. Thus, if the reader of the message only gets the message a few minutes later, he will be able to realize the "current position" is a bit stale. Thus, the user could select an option in the application to generate a message such as "This is my current position at 2:25 p.m."

As yet another variant, where a location (GPS fix, POI or crosshairs) is sent, in addition to the link enabling the recipient to download the map showing the map location, a further link could be provided to enable the recipient to download a route to that location. For example, the recipient could be prompted to optionally download a map route to the location from the recipient's own current location (if he is in GPS tracking mode), from the recipient's home or work address, from crosshair coordinates, or from any other predetermined or specified address. This would be particularly helpful where two individuals using handheld devices are attempting to rendezvous.

This novel method is preferably implemented on a GPS-enabled wireless communications device such as the BlackBerry@ by Research in Motion Limited (or on other wireless handhelds, cellular phones, wireless-enabled laptops or wireless-enabled PDAs). The aspects of the present technology that involve GPS functionalities are intended for mobile devices. However, those aspects of the present technology that are unrelated to GPS functionalities (or other position-determining technologies) can, of course, be used on wireless device that are not GPS-enabled or on desktop applications.

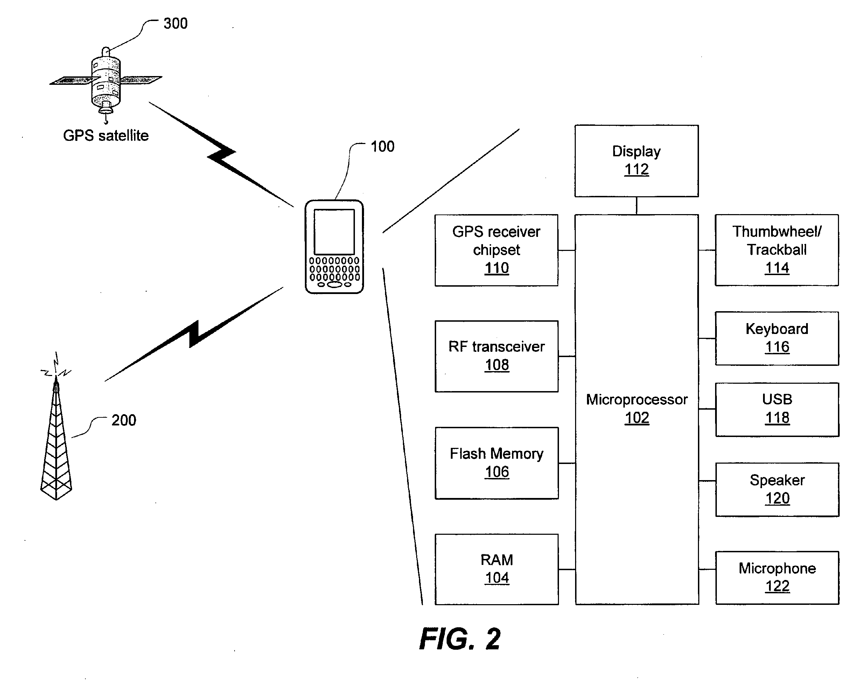

FIG. 2 is a block diagram depicting certain key components of a GPS-enabled wireless communications device 100. It should be expressly understood that this figures is intentionally simplified to show only certain components; the device 100 of course includes other components beyond what are shown in FIG. 2. The device 100 includes a microprocessor 102 (or simply a "processor") which interacts with memory in the form of RAM 104 and Flash Memory 106, as is well known in the art. The device 100 includes an RF transceiver 108 for communicating wirelessly with one or more base stations 200. The device 100 includes a GPS receiver chipset 110 for receiving GPS radio signals transmitted from one or more orbiting GPS satellites 300. In terms of input/output devices or user interfaces, the device 100 typically includes a display 112 (e.g. a small LCD screen), a thumbwheel and/or trackball 114, a keyboard 116, a USB 118 or serial port for connecting to peripheral equipment, a speaker 120 and a microphone 122. The processor and memory thus enable a map application to run on the wireless device. The map application can interact with the GPS receiver 110 by mapping the GPS-determined position coordinates for the device so as to graphically display the device's current location, as is known in the art.

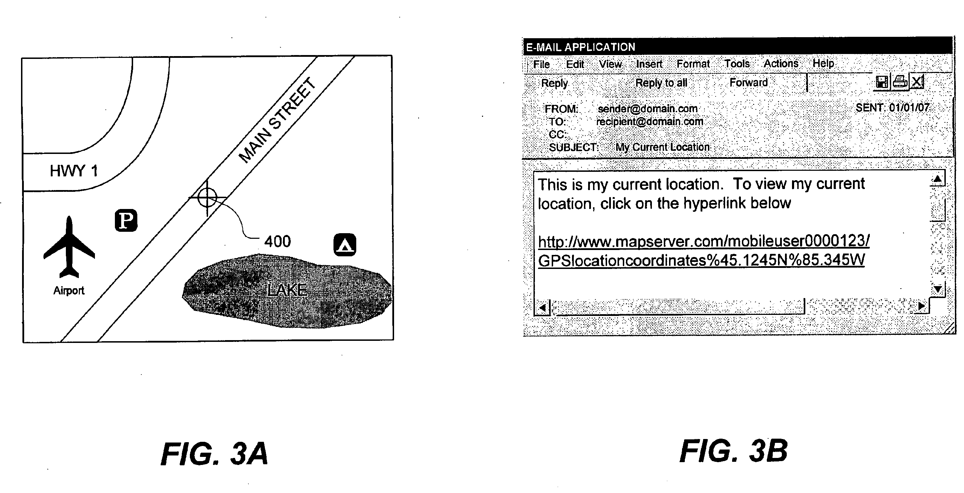

By way of example only, FIG. 3A schematically depicts a map showing the current location 400 of the device as determined from a GPS position fix (e.g. using the GPS receiver chipset embedded in the wireless handheld device or using a Bluetooth™-compatible GPS puck connected to the wireless handheld device). When the user selects Email Location (or Send Location), the map application executing on the device automatically generates a message (such as the one shown in FIG. 3B) with predetermined text such as "This is my current location. To view my current location, click on the hyperlink below." In other words, as shown in FIG. 3B, the e-mail contains automatically-generated text notifying the recipient that he has received a hyperlinked URL to enable the recipient to download a map showing the current position of the sender's device. As will be readily appreciated, this particular wording is presented merely by way of example.

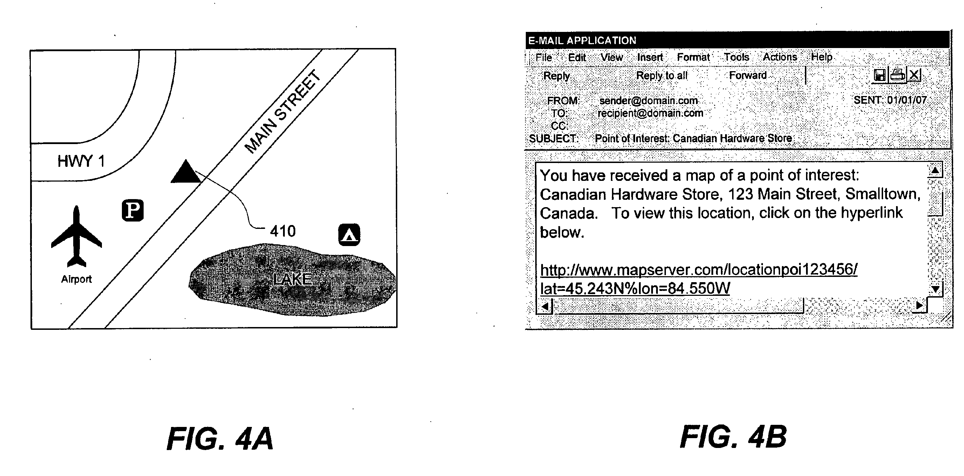

FIG. 4A is a schematic depiction of a map showing a point of interest (POI) designated by numeral 410. In this example, the POI 410 is a hardware store, e.g. Canadian Hardware Store located at 123 Main Street, Smalltown, Canada. This POI can be obtained by searching for businesses in Smalltown, for example. The map is then populated with all POI's that satisfy the search criterion. Each POI is represented on the map usually with a number, symbol, icon or marker that has a bubble caption or hyperlink to obtain further details about the particular POI. In this example, the POI is designated using a black triangle, although this is purely arbitrary and presented merely for the purposes of illustration.

FIG. 4B is a schematic depiction of an e-mail containing automatically generated text notifying the recipient that he has received a hyperlinked URL to enable the recipient to download a map showing the point of interest. In the example e-mail shown in FIG. 4B, the text automatically generated by the map application reads: "You have received a map of a point of interest: Canadian Hardware Store, 123 Main Street, Smalltown, Canada. To view this location, click on the hyperlink below." Many variations on this text message could, of course, be used in lieu of this particular formulation.

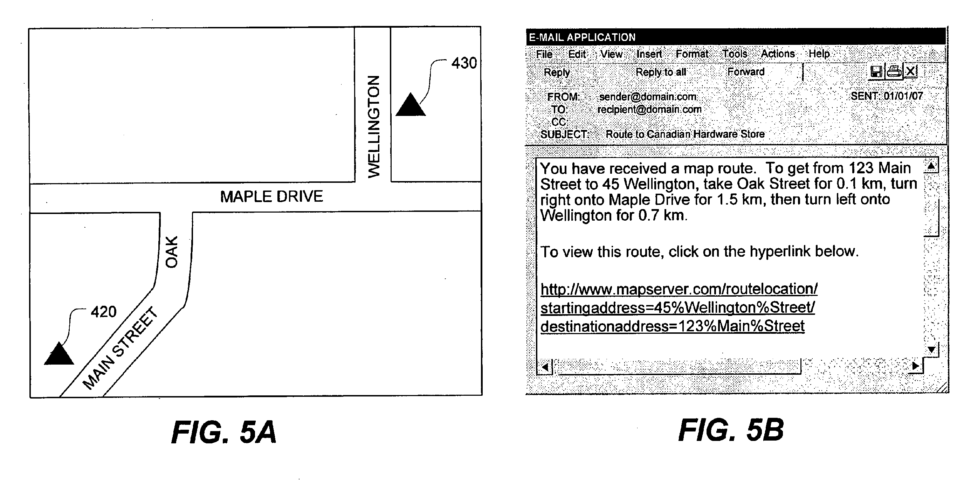

FIG. 5A is a schematic depiction of a map showing a route from a starting location 420 to a destination location 430. In this example, two black triangles are used to designate the starting location 420 and the destination location 430, although this is purely arbitrary. The map may include arrows (not illustrated) for indicating the direction of travel.

FIG. 5B is a schematic depiction of an e-mail containing automatically generated text presenting the driving directions and further providing a hyperlinked URL to enable the recipient to download a map showing the route. For example, the directions to get from the starting location (starting address) to the destination location (destination address) are incorporated, embedded or inserted into the message directly as text, e.g. "You have received a map route. To get from 123 Main Street to 45 Wellington, take Oak Street for 0.1 km, turn right onto Maple Drive for 1.5 km, then turn left onto Wellington for 0.7 km. To view this route, click on the hyperlink below." The wording and content embedded into the text portion of the message can of course be varied.

The foregoing technology thus enables a map application to automatically generate "context-sensitive" text messages, in e-mail, SMS, MMS, or PIN formats. The messages are context-sensitive because the map application determines map location information associated with the map location selected by the user for sending/e-mailing to the recipient. In other words, the map location information can be the fact that the device is in GPS tracking mode and that the location showing in the map application is the current location of the device. If GPS is inoperative and the map's crosshairs are merely on a set of coordinates, the map location information is the fact that the location is not a GPS fix and that it is merely crosshair coordinates. Likewise, if the location is a POI (point of interest), the map location information is the name of the POI (landmark, business) and its address, website, etc. (i.e. the information usually contained in the caption bubble). If the location is actually the starting location or destination location of a route, then the map location information is the fact that the location is, in fact, part of a route.

In other implementations, the location information descriptive of the context in which the message is being generated can be determined from the application that initiates the mapping. In other words, as will be elaborated below, if an address book or calendar application initiates the mapping, then text is automatically generated and inserted into the message to reflect the context from which the location originates.

For example, if the user pulls up an address book entry from his contact/address book application, and chooses "View Work Address" or "View Home Address", and then, once the address has been mapped, chooses to "Send Location" (or "Email Location"), the map application will recognize that the location derives from the address book/contacts application. In this case, text such as, for example, "This is the work location of John Doe" or "This is the home location of John Doe" (or words to that effect) is automatically generated and inserted into the message where the user chooses to map and send the address of another person. By inputting one's own home and work address into the address book, it is then possible to view one's own home and work locations and thus, using this technology, to send a location to a recipient with a text message that would state, for example, "This is my home location" or "This is my work location."

As a further example, consider the case where a user pulls up a meeting entry (or event entry) in a calendaring application, and then chooses to map the location of the meeting or event (assuming address information is contained in the meeting entry). If the user further chooses to send the location to a recipient, then the map application will recognize that the location originates from a meeting/event entry in the calendaring application. This is the "context" of the location. The location information descriptive of the context within which the location originates is then inserted automatically as text into the message, such as, for example, "This is the location of the meeting" or "This is where the event will take place." Optionally, the device could extract and specify a date and time of the meeting, e.g. "This is the location of the meeting on January 26, 2007."

In yet a further implementation, the processor could cross-correlate any location that is to be sent with address locations or meeting locations stored in address book or calendaring applications on the device. In other words, in this particular implementation, if the user chooses the menu item to trigger the sending of a location, the processor would determine (prior to generating and sending the message) whether the location to be sent corresponds to a known address or meeting/event location stored in an address book or calendaring application. If so, the location information describing the location to be sent can be automatically generated and inserted into the message, e.g. "This is the location of the meeting." This implementation would be particularly useful in the case where a number of mapped locations are cached and the user then chooses to send one of them, in which case the processor would determine location information for the location to be sent by identifying which application originated the cached mapping of the location to be sent.

The foregoing method steps can be implemented as coded instructions in a computer program product. In other words, the computer program product is a computer-readable medium upon which software code is recorded to perform the foregoing steps when the computer program product is loaded into memory and executed on the microprocessor of the wireless communications device.

This new technology has been described in terms of specific implementations and configurations which are intended to be exemplary only. The scope of the exclusive right sought by the Applicant is therefore intended to be limited solely by the appended claims.

## Claims

1. A method, performed on a computing device (100), of generating a message from a map application, the message describing a map location that a user of the computing device sends to a recipient device, the method comprising the following steps performed by the map application:
enabling selection of a map location (12) by the user, the map location representing a location that can be viewed on a map;
determining map location information (14) descriptive of the map location that has been selected, the map location information being determined by identifying an application that is executing on the computing device and from which the location originates; and
generating the message (16) to be sent to the recipient device, the message containing a link to enable the recipient device to download a map showing the map location and further containing the map location information automatically embedded as text within the message to describe the map location.

2. The method as claimed in claim 1 wherein the step of determining map location information (14) comprises determining whether the location is based on a Global Positioning System 'GPS' position fix for the computing device (100) whereby the message is generated by inserting text into the message stating that the map location represents the current position of the computing device (100).

3. The method as claimed in claim 1 wherein the step of determining map location information (14) comprises determining whether the location is a Point of Interest having associated therewith any of address, phone, fax, e-mail, or Universal Resource Location 'URL' information whereby the message is generated byinserting address information for the Point of Interest as text into the message.

4. The method as claimed in claim 1 wherein the step of enabling selection of the map location (12) comprises steps of enabling the selection of a starting location (420) and a destination location (430) to thus define a route whereby the message is generated by embedding route directions as text directly into the message.

5. A computer program product comprising code adapted to perform the steps of any one of the preceding claims when the computer program product is loaded into memory (104) and executed on a processor (102) of a computing device (100).

6. A computing device (100) for sending a message from a map application to enable a user of a recipient device to view a location on a map, the computing device (100) comprising:
an input device (114, 116) for enabling a user of the computing device (100) to select a map location to be sent to the recipient device, the map location representing a location that can be viewed on a map; and
a memory (104, 106) and a processor (102) adapted to store and execute the map application for (i) determining map location information, descriptive of the map location selected, by identifying an application that is executing on the computing device and from which the location originates and (ii) for generating the message to be sent to the recipient device, the message containing a link to enable the recipient device to download the map showing the map location and further containing the map location information automatically inserted as text within the message to describe the map location.

7. The computing device (100) as claimed in claim 6 wherein the computing device is a wireless communications device comprising a Global Positioning System 'GPS' receiver (110 for providing a GPS position fix to enable the processor (102) to determine whether the location is a current position of the wireless communications device (100) wherein the text comprises a statement that the map location sent to the recipient device represents the current position of the wireless communications device (100).

8. The computing device (100) as claimed in claim 6 or claim 7 wherein the text comprises address information for a location that is a Point of Interest.

9. The computing device (100) as claimed in claim 6 wherein the input device (114, 116) is adapted to enable the user of the computing device (100) to select a starting location (420) and a destination location (430) thus defining a map route and wherein the text comprises route directions generated by the map application.

10. The computing device as claimed in claim 9 wherein the application is a calendaring application having a function for viewing a location of an event or is an address book application having a function for viewing a location of an address.

## Patentansprüche

1. Verfahren, das auf einer Rechenvorrichtung (100) ausgeführt wird, zum Erzeugen einer Nachricht von einer Kartenanwendung, wobei die Nachricht eine Kartenposition beschreibt, die ein Benutzer der Rechenvorrichtung an eine Empfängervorrichtung schickt, wobei das Verfahren die folgenden von der Kartenanwendung ausgeführten Schritte umfasst:
Ermöglichen einer Auswahl einer Kartenposition (12) vom Benutzer, wobei die Kartenposition eine Position darstellt, die auf einer Karte gesehen werden kann,
Bestimmen einer Kartenpositionsinformation (14), welche die Kartenposition beschreibt, die ausgewählt worden ist, wobei die Kartenpositionsinformation bestimmt wird, indem eine Anwendung identifiziert wird, die auf der Rechenvorrichtung läuft und von der die Position abstammt, und
Erzeugen der Nachricht (16), die an die Empfängervorrichtung verschickt werden soll, wobei die Nachricht einen Link enthält, um es der Empfängervorrichtung zu ermöglichen, eine Karte herunterzuladen, welche die Kartenposition zeigt, und ferner die Kartenpositionsinformation automatisch als Text in der Nachricht eingebettet enthält, um die Kartenposition zu beschreiben.

2. Verfahren nach Anspruch 1, wobei im Schritt des Bestimmens der Kartenpositionsinformation (14) bestimmt wird, ob die Position auf eine Standortbestimmung eines globalen Positionsbestimmungssystems 'GPS' für die Rechenvorrichtung (100) basiert, womit die Nachricht erzeugt wird, indem Text in die Nachricht eingefügt wird, der angibt, dass die Kartenposition den aktuellen Ort der Rechenvorrichtung (100) darstellt.

3. Verfahren nach Anspruch 1, wobei im Schritt des Bestimmens der Kartenpositionsinformation (14) bestimmt wird, ob die Position ein Interessenspunkt ist, mit dem eine von Adress-, Telefon-, Fax-, E-Mail-, Universal-Resource-Location-"URL"-Information verknüpft ist, womit die Nachricht erzeugt wird, indem eine Adressinformation für den Interessenspunkt als Text in die Nachricht eingefügt wird.

4. Verfahren nach Anspruch 1, wobei im Schritt des Ermöglichens einer Auswahl der Kartenposition (12) die Auswahl einer Startposition (420) und einer Zielposition (430) ermöglicht wird, um auf diese Weise eine Route festzulegen, womit die Nachricht erzeugt wird, indem Routenrichtungen als Text direkt in die Nachricht eingebettet wird.

5. Computerprogrammprodukt mit Code, der dazu ausgelegt ist, die Schritte eines der vorhergehenden Ansprüche durchzuführen, wenn das Computerprogrammprodukt in den Speicher (104) geladen und auf einem Prozessor (102) einer Rechenvorrichtung (100) ausgeführt wird.

6. Rechenvorrichtung (100) zum Verschicken einer Nachricht von einer Kartenanwendung, um es einem Benutzer einer Empfängervorrichtung zu ermöglichen, eine Position auf einer Karte zu sehen, wobei die Rechenvorrichtung (100) Folgendes enthält:
eine Eingabevorrichtung (114, 116) zum Ermöglichen, dass ein Benutzer der Rechenvorrichtung (100) eine Kartenposition auswählen kann, die an die Empfängervorrichtung verschickt werden soll, wobei die Kartenposition eine Position darstellt, die auf einer Karte gesehen werden kann, und
einen Speicher (104, 106) und einen Prozessor (102), die dazu ausgelegt sind, die Kartenanwendung (i) zum Bestimmen der Kartenpositionsinformation, welche die ausgewählte Kartenposition beschreibt, indem eine Anwendung identifiziert wird, die auf der Rechenvorrichtung läuft und von der die Position abstammt, und (ii) zum Erzeugen der Nachricht, die an die Empfängervorrichtung verschickt werden soll, zu speichern und auszuführen, wobei die Nachricht einen Link enthält, um es der Empfängervorrichtung zu ermöglichen, die Karte herunterzuladen, welche die Kartenposition zeigt, und ferner die Karenpositionsinformation enthält, die automatisch als Text in die Nachricht eingefügt wird, um die Kartenposition zu beschreiben.

7. Rechenvorrichtung (100) nach Anspruch 6, wobei die Rechenvorrichtung eine drahtlose Kommunikationsvorrichtung ist, die einen GPS-Empfänger (110) zum Bereitstellen einer GPS-Standortbestimmung umfasst, um es dem Prozessor (102) zu ermöglichen zu bestimmen, ob die Position eine aktuelle Position der drahtlosen Kommunikationsvorrichtung (100) ist, wobei der Text eine Angabe umfasst, dass die Kartenposition, die an die Empfängervorrichtung geschickt worden ist, den aktuellen Ort der drahtlosen Kommunikationsvorrichtung (100) darstellt.

8. Rechenvorrichtung (100) nach Anspruch 6 oder 7, wobei der Text eine Adressinformation für eine Position umfasst, die ein Interessenspunkt ist.

9. Rechenvorrichtung (100) nach Anspruch 6, wobei die Eingabevorrichtung (114, 116) dazu ausgelegt ist, es dem Benutzer der Rechenvorrichtung (100) zu ermöglichen, eine Startposition (420) und eine Zielposition (430) auszuwählen, und auf diese Weise eine Kartenroute festlegt, und wobei der Text Routenangaben umfasst, die von der Kartenanwendung erzeugt worden sind.

10. Rechenvorrichtung nach Anspruch 9, wobei die Anwendung eine Kalenderanwendung ist, die eine Funktion zum Sehen einer Position eines Ereignisses aufweist, oder eine Adressbuchanwendung ist, die eine Funktion zum Sehen einer Position einer Adresse aufweist.

## Revendications

1. Procédé, mis en oeuvre sur un dispositif informatique (100), de production d'un message issu d'une application de cartographie, le message décrivant une position cartographique qu'un utilisateur du dispositif informatique envoie à un dispositif destinataire, le procédé comprenant les étapes, exécutées par l'application de cartographie, consistant à :
permettre la sélection d'une position cartographique (12) par l'utilisateur, la position cartographique représentant une position qui peut être observée sur une carte ;
déterminer des informations de position cartographique (14), décrivant la position cartographique qui a été sélectionnée, les informations de position cartographique étant déterminées en identifiant une application qui s'exécute sur le dispositif informatique et dont provient la position ; et
produire le message (16) à envoyer au dispositif destinataire, le message comprenant un lien permettant au dispositif destinataire de télécharger une carte contenant la position cartographique et comprenant en outre les informations de position cartographique, qui sont automatiquement intégrées sous forme de texte dans le message, afin de décrire la position cartographique.

2. Procédé selon la revendication 1, dans lequel l'étape de détermination des informations de position cartographique (14) comprend l'étape consistant à déterminer si la position est fondée sur un relevé de position par GPS (Système mondial de localisation) pour le dispositif informatique (100), si bien que le message est produit en insérant dans le message un texte indiquant que la position cartographique représente la position courante du dispositif informatique (100).

3. Procédé selon la revendication 1, dans lequel l'étape de détermination des informations de position cartographique comprend l'étape consistant à déterminer si la position est un point intéressant, auquel est associé un élément parmi une adresse, un numéro de téléphone, un numéro de télécopie, une adresse de courriel ou des informations de type URL (Localisateur uniforme de ressource), si bien que le message est produit en insérant dans le message, sous la forme de texte, des informations d'adresse pour le point intéressant.

4. Procédé selon la revendication 1, dans lequel l'étape permettant la sélection de la position cartographique (12) comprend l'étape consistant à autoriser la sélection d'une position de départ (420) et d'une position de destination (430) afin de définir ainsi un itinéraire, si bien que le message est produit en insérant dans le message, directement sous forme de texte, des instructions d'itinéraire.

5. Progiciel d'ordinateur comprenant du code conçu pour exécuter les étapes selon l'une quelconque des revendications précédentes lorsque le progiciel d'ordinateur est chargé en mémoire (104) et exécuté sur un processeur (102) du dispositif informatique (100).

6. Dispositif informatique (100) destiné à envoyer un message à partir d'une application de cartographie, afin de permettre à un utilisateur d'un dispositif destinataire d'observer une position sur une carte, le dispositif informatique (100) comprenant :
un dispositif d'entrée (114, 116), destiné à permettre à un utilisateur du dispositif informatique (100) de sélectionner une position cartographique à envoyer au dispositif destinataire, la position cartographique représentant une position qui peut être observée sur une carte ;
une mémoire (104, 106) et un processeur (102), conçus pour stocker et exécuter l'application de cartographie afin
(i) de déterminer des informations de position cartographique, décrivant la position cartographique qui a été sélectionnée, en identifiant une application qui s'exécute sur le dispositif informatique et dont provient la position, et
(ii) de produire le message à envoyer au dispositif destinataire, le message comprenant un lien permettant au dispositif destinataire de télécharger la carte qui contient la position cartographique et comprenant en outre les informations de position cartographique, qui sont automatiquement insérées sous forme de texte dans le message, afin de décrire la position cartographique.

7. Dispositif informatique (100) selon la revendication 6, dans lequel le dispositif informatique est un dispositif de communication sans fil comprenant un récepteur GPS (110) destiné à fournir un relevé de position GPS afin de permettre au processeur (102) de déterminer si la position est une position courante du dispositif de communication sans fil (100), dans lequel le texte comprend un énoncé indiquant que la position cartographique envoyée au dispositif destinataire représente la position courante du dispositif de communication sans fil (100).

8. Dispositif informatique (100) selon la revendication 6 ou la revendication 7, dans lequel le texte comprend des informations d'adressage pour une position qui est un point intéressant.

9. Dispositif informatique (100) selon la revendication 6, dans lequel le dispositif d'entrée (114, 116) est conçu pour permettre à l'utilisateur du dispositif informatique (100) de sélectionner une position de départ (420) et une position de destination (430), afin de définir ainsi un itinéraire sur carte, et dans lequel le texte comprend des instructions d'itinéraire produites par l'application de cartographie.

10. Dispositif informatique selon la revendication 9, dans lequel l'application est une application d'agenda possédant une fonction de visualisation de la position d'un événement ou est une application de carnet d'adresses possédant une fonction de visualisation de la position d'une adresse.
